# EUROPÄISCHE PATENTSCHRIFT

(11) **EP 2 945 813 B1**
(45) Veröffentlichungstag und Bekanntmachung des Hinweises auf die Patenterteilung: **23.05.2018**
(21) Anmeldenummer: 14700178.8
(22) Anmeldetag: 09.01.2014
(51) Int. Cl.: B60H 1/34

(54) **LÜFTUNGSGITTER MIT LUFTLEITELEMENT SOWIE VERFAHREN ZUR HERSTELLUNG EINES SOLCHEN LÜFTUNGSGITTERS**
VENTILATION MESH WITH AIR CONDUCTING ELEMENT, AND METHOD FOR PRODUCING SUCH A VENTILATION MESH
GRILLE D'AÉRATION PRÉSENTANT UN ÉLÉMENT DE GUIDAGE D'AIR, ET PROCÉDÉ DE PRODUCTION D'UNE TELLE GRILLE D'AÉRATION

(30) Priorität: 16.01.2013 DE 102013000625
(43) Veröffentlichungstag der Anmeldung: 25.11.2015
(73) Patentinhaber: Volkswagen Aktiengesellschaft, 38440 Wolfsburg (DE)
(72) Erfinder: ZACHARIAS, Norman, 38489 Jübar (DE); MOLEON-ZAFRA, David, 38159 Vechelde (DE)
(86) Internationale Anmeldenummer: PCT/EP2014/050263
(87) Internationale Veröffentlichungsnummer: WO 2014/111299

(56) Entgegenhaltungen:
- EP-A1- 2 206 621
- DE-A1-102011 051 185
- US-A- 4 583 448
- US-A1- 2009 004 960
- US-A1- 2011 181 066

## Beschreibung

Die Erfindung betrifft ein Lüftungsgitter für einen Kühlergrill eines Kraftfahrzeuges mit einem Luftleitelement sowie ein Verfahren zur Herstellung eines Lüftungsgitters mit einem Luftleitelement.

In DE 103 41 983 A1 und DE 10 2004 057 477 B4 sind als Kühlergrill bezeichnete Lüftungsgitter beschrieben, welche seitlich aus dem Lüftungsgitter herausragende Zapfen aufweisen, die mit einer in einer Kulissenführungseinrichtung ausgebildeten Nut zusammenwirken.

Aus JP 03231877 A ist ein als Kühlergrill bezeichnetes Lüftungsgitter bekannt, das mindestens ein als Hohlkörper ausgebildetes Element umfasst.

Aus DE 195 48 551 C2 ist eine Lüftungsklappenanordnung für Kraftfahrzeuge zum druckdifferenzierten Verschluss von Lüftungskanälen bekannt, die einen Trägerteil mit einem Grundrahmen und einen darin ausgebildeten Gittereinsatz mit mehreren Lüftungsöffnungen umfasst, wobei in den Lüftungsöffnungen weichelastische, lappenartige Lüftungsklappen angeordnet sind und wobei an den Längsseiten der Lüftungsklappen Klemmleisten zur Fixierung der Lüftungsklappen in Montagenuten einer Längstraverse des Gittereinsatzes ausgebildet sind.

Aus DE 196 29 115 C2 ist eine Vorrichtung zur Sicherstellung eines Druckausgleichs zwischen Fahrzeuginnenraum und Fahrzeugumgebung (Zwangsentlüftung) bekannt. Die Vorrichtung umfasst einen eine Öffnung begrenzenden Rahmen aus einem harten Kunststoff und eine an den Rahmen angespritzte, ebene Lüftungsklappe aus einem Elastomerwerkstoff, wobei eine elastische Rückstellkraft einem Öffnen der Lüftungsklappe aus einer Geschlossenstellung entgegenwirkt.

Keine der vorstehend beschriebenen Druckschriften nimmt Bezug auf ein Lüftungsgitter für einen Kühlergrill eines Kraftfahrzeuges mit Luftleitelement. In der Praxis sind jedoch in den letzten Jahren vermehrt Lüftungsgitter zum Einsatz gekommen, die mit Luftleitelementen verbunden werden, um die Querschnittsfläche hinter dem Lüftungsgitter zu verändern, insbesondere um die das Lüftungsgitter durchströmende Luft gezielt auf ein Bauteil zu leiten und um strömungstechnisch ungünstige Luftverwirbelungen zu vermeiden. Alle aus der Praxis bekannten Luftleitelemente werden als separate Bauteile hergestellt und anschließend mit dem Lüftungsgitter verbunden.

Der Erfindung liegt die Aufgabe zugrunde, ein Lüftungsgitter mit einem Luftleitelement für einen Kühlergrill zur Verfügung zu stellen, das einfach und kostengünstig herstellbar ist.

Die Lösung der Aufgabe erfolgt erfindungsgemäß mit den Merkmalen der Ansprüche 1 bzw. 10.

Ein erfindungsgemäßes Lüftungsgitter für einen Kühlergrill eines Kraftfahrzeuges umfasst mindestens einen Rahmen und innerhalb des Rahmens angeordnete Öffnungen zum Durchströmen von Luft sowie mindestens ein in Strömungsrichtung hinter dem Rahmen angeordnetes Luftleitelement, welches derart angeordnet ist, dass es die Strömungsrichtung von das Lüftungsgitter durchströmender Luft hinter dem Rahmen zumindest teilweise beeinflusst. Dabei ist das mindestens eine Luftleitelement einstückig mit dem Rahmen ausgebildet. Ein derart ausgebildetes Lüftungsgitter kann einfach und kostengünstig als Kunststoffspritzgussteil und insbesondere in nur einer Werkzeugform hergestellt werden.

In einer besonders praktischen Ausführungsform eines erfindungsgemäßen Lüftungsgitters ist das Luftleitelement über ein Filmscharnier einstückig an dem Rahmen ausgebildet. Bei dieser Ausführungsform können die Herstellungskosten zusätzlich gesenkt werden, da das Luftleitelement bei der Herstellung anders positioniert sein kann als bei der späteren Verwendung, insbesondere in einem Kraftfahrzeug.

Diesbezüglich wird auch auf das erfindungsgemäße Verfahren verwiesen, für welches unabhängig Schutz beansprucht wird. Ein erfindungsgemäßes Verfahren dient der Herstellung eines Lüftungsgitters für einen Kühlergrill eines Kraftfahrzeuges mit mindestens einem Rahmen und innerhalb des Rahmens angeordneten Öffnungen zum Durchströmen von Luft sowie einem in Strömungsrichtung hinter dem Rahmen angeordneten Luftleitelement, welches derart angeordnet ist, dass es die Strömungsrichtung von das Lüftungsgitter durchströmender Luft hinter dem Rahmen zumindest teilweise beeinflusst. Gemäß dem erfindungsgemäßen

Verfahren werden in einem ersten Verfahrensschritt mindestens der Rahmen und das Luftleitelement in einer frei wählbaren Lage im Kunststoffspritzgießverfahren so hergestellt, dass der Rahmen und das Luftleitelement nach der Herstellung über ein Filmscharnier miteinander verbunden sind. In einem zweiten Schritt wird dann das Luftleitelement durch eine Relativbewegung gegenüber dem Rahmen um das Filmscharnier in eine Position gebracht, in welcher es die Strömungsrichtung von das Lüftungsgitter durchströmender Luft hinter dem Rahmen zumindest teilweise beeinflusst. Mit anderen Wort ausgedrückt können der Rahmen und das über ein Filmscharnier mit dem Rahmen verbundene mindestens eine Luftleitelement zunächst im Kunststoffspritzgießverfahren in einer "aufgeklappten Lage" hergestellt werden und anschließend durch Klappen um das Filmscharnier in eine "umgeklappte Lage" gebracht werden. Mit einer "aufgeklappten Lage" sind insbesondere solche Lagen gemeint, in welchen das Luftleitelement eine Luftströmung durch das Lüftungsgitter nicht beeinflussen würde. Besonders bevorzugt sind ferner solche Lagen, in denen die Herstellung im Kunststoffspritzgießverfahren besonders einfach und kostengünstig, d.h. insbesondere ohne zusätzliche Einleger und/oder Kerne und/oder sonstige Hilfselemente erfolgen kann.

In einer weiteren praktischen Ausführungsform eines erfindungsgemäßen Lüftungsgitters sind zwei Luftleitelemente an gegenüberliegenden Seiten an dem Rahmen angeordnet. Dadurch kann eine Trichterform erzeugt werden, beispielsweise indem der Strömungsquerschnitt hinter dem Lüftungsgitter von rechts und von links mit Hilfe entsprechender Luftleitelemente verjüngend ausgebildet ist. Die Trichterform kann auch durch weitere Luftleitelemente so ergänzt werden, dass sich der Strömungsquerschnitt hinter dem Rahmen an allen Seiten verjüngt.

Das Luftleitelement weist vorzugsweise ausschließlich glatte, luftundurchlässige Flächen auf. Weiter bevorzugt sind zwischen mehreren, unterschiedlich ausgerichteten Flächen an einem Luftleitelement Radien ausgebildet. Bevorzugt sind Radien größer als 5 mm, besonders bevorzugt sind Radien größer als 10 mm.

In einer weiteren praktischen Ausführungsform eines erfindungsgemäßen Lüftungsgitters sind an dem Rahmen und an dem mindestens einen Luftleitelement korrespondierende Rastelemente zur Fixierung des Luftleitelements an dem Rahmen ausgebildet.

Für ein erfindungsgemäßes Lüftungsgitter für einen Kühlergrill eines Kraftfahrzeuges, ist es vorteilhaft, wenn das Luftleitelement im eingebauten Zustand einen Winkel von 10° bis 80° zur Querachse des Kraftfahrzeuges aufweist. Bevorzugt beträgt der Winkel zwischen Luftleitelement und Querachse des Kraftfahrzeuges 15° bis 50°, besonders bevorzugt 20° bis 40°. Die vorstehend genannten Winkelbereiche, insbesondere der letztgenannte Winkelbereich, haben den Vorteil, dass sie eine nur geringe Einbautiefe benötigen und mit diesen zugleich sehr gute strömungstechnische Ergebnisse erzielt werden (Reduzierung des c_{w}-Wertes eines Kraftfahrzeuges).

Hinsichtlich der geometrischen Gestaltung bevorzugt sind Lüftungsgitter mit Luftleitelementen, die einen u-förmigen Querschnitt aufweisen. Derartige Luftleitelemente sind für eine seitliche Anpassung der Kühlergrills nahezu aller Kraftfahrzeuge geeignet, insbesondere wenn sich das mindestens eine Luftleitelement bzw. zwei seitlich angeordnete Luftleitelemente über die gesamte Höhe des Rahmens erstrecken. Besonders bevorzugt ist es in diesem Fall, wenn das Luftleitelement im eingebauten Zustand entlang eines sich über die Höhe des Rahmens erstreckenden Kontaktbereichs unmittelbar an dem Rahmen anliegt und somit ein im Wesentlichen spaltfreier Übergang zwischen Rahmen und Luftleitelement geschaffen ist. In einer besonders bevorzugten Ausführungsform erstreckt sich das Luftleitelement nicht nur über die gesamte Höhe an den Seiten des Rahmen sondern ohne Unterbrechung zusätzlich zumindest teilweise entlang der sich anschließenden Oberseite und/oder entlang der sich anschließenden Unterseite des Rahmens, so dass die durch die Seitenbereiche des Lüftungsgitters (in Strömungsrichtung gesehen) im Bereich des Luftleitelements durchströmende Luft in Fahrzeugquerrichtung umgelenkt wird.

Weitere praktische Ausführungsformen und Vorteile der Erfindung sind nachfolgend im Zusammenhang mit den Zeichnungen beschrieben. Es zeigen:
- Fig. 1: ein erfindungsgemäßes Lüftungsgitter mit Luftleitelement in Werkzeuglage in einer Ansicht von vorne,
- Fig. 2: ein erfindungsgemäßes Lüftungsgitter mit Luftleitelement in Werkzeuglage in einer Ansicht von hinten,
- Fig. 3: ein erfindungsgemäßes Lüftungsgitter mit Luftleitelement in Einbaulage in einer Ansicht von hinten,
- Fig. 4: einen Vertikalschnitt durch das in den Figuren 1-3 gezeigte Lüftungsgitter gemäß Linie IV-IV in Figur 1,
- Fig. 5: den in Figur 4 mit V gekennzeichneten Bereich in einer vergrößerten Darstellung,
- Fig. 6: einen Horizontalschnitt durch das in den Figuren 1-3 gezeigte Lüftungsgitter gemäß Linie VI-VI in Figur 1 und
- Fig. 7: den in Figur 6 gezeichneten Bereich in einer vergrößerten Darstellung.

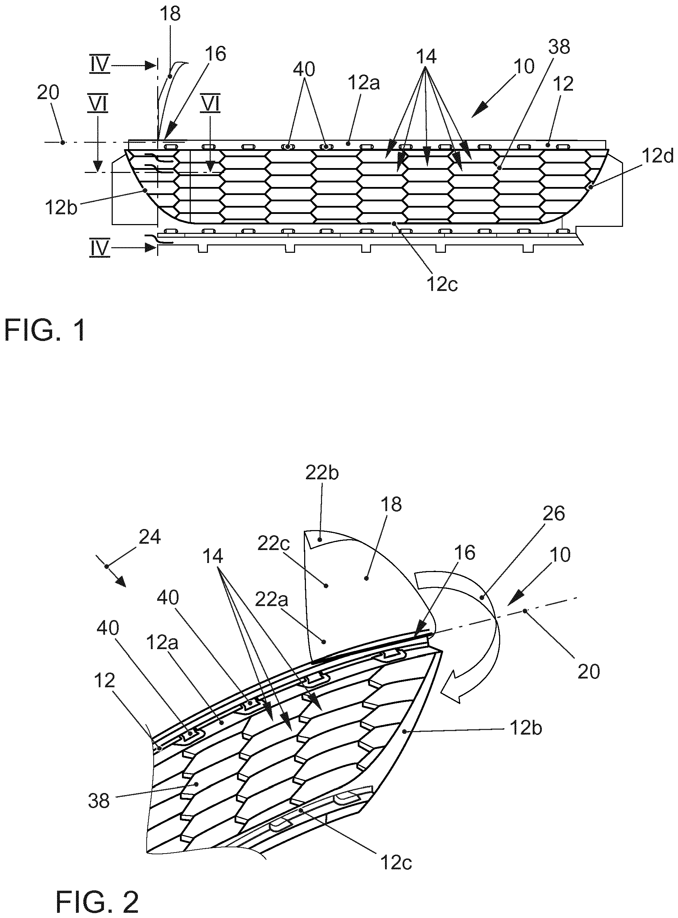

Die Figuren 1 bis 3 zeigen ein erfindungsgemäßes Lüftungsgitter 10 mit einem Rahmen 12 und einer innerhalb des Rahmens 12 angeordneten Gitterstruktur 38 mit Öffnungen 14 zum Durchströmen von Luft. Der Rahmen 12 ist geschlossen und besteht aus einem oberen Rahmenabschnitt 12a, seitlichen Rahmenabschnitten 12b, 12d und einen unteren Rahmenabschnitt 12c. An dem oberen Rahmenabschnitt 12a ist ein Filmscharnier 16 ausgebildet, welches das Verbindungselement zu einem Luftleitelement 18 darstellt. Das Filmscharnier 16 umfasst einen klappbar ausgebildeten, linearen Verbindungsbereich entlang einer Schwenkachse 20, welche in der gezeigten Ausführungsform horizontal angeordnet ist.

Es ist ebenfalls möglich, ein oder mehrere nicht dargestellte, identische oder abweichend gestaltete Luftleitelemente an anderen, insbesondere linearen Rahmenabschnitten des Rahmens über Filmscharniere anzubinden, insbesondere in den seitlichen Rahmenabschnitten 12b oder 12d.

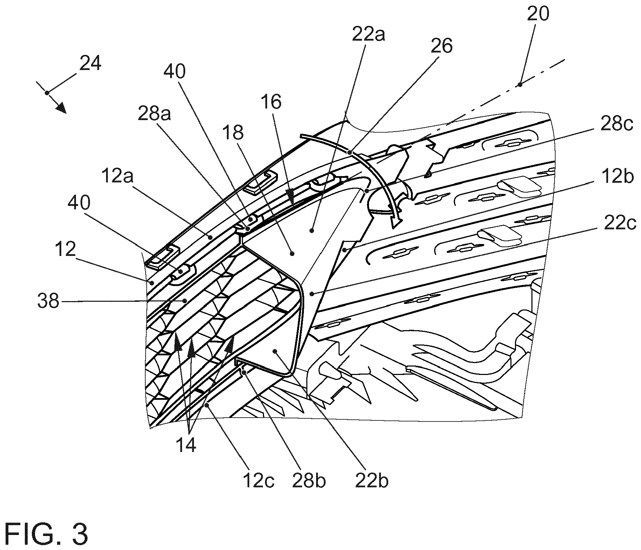

Wie insbesondere in den Figuren 2 und 3 erkennbar ist, besteht das Luftleitelement 18 im Wesentlichen aus einer oberen Fläche 22a, einer unteren Fläche 22b und einer Verbindungsfläche 22c, welche die obere Fläche 22a und die untere Fläche 22b miteinander verbindet. Die Verbindungsfläche 22c ist in der in Figur 3 gezeigten Einbaulage gegenüber der Fahrzeugquerrichtung um 30° geneigt, so dass Luft, die in der mit dem Pfeil 26 gekennzeichneten, der Fahrtrichtung eines Kraftfahrzeuges entgegengesetzten Hauptströmungsrichtung 24 im Bereich des Luftleitelements 18 durch die Öffnungen 14 strömt, um 60° zur Fahrzeugmitte hin abgelenkt zu werden. Die Flächen 22a, 22b, 22c sind eben, glatt und vorzugsweise luftundurchlässig ausgebildet. In Figur 3 ist auch erkennbar, dass das Luftleitelement 18 einen u-förmigen Querschnitt aufweist, wobei die Länge der Schenkel von dem seitlichen Rahmenabschnitt 12b aus zur Mitte hin zunehmend ist. In den Verbindungsbereichen sind Radien von ca. 5-10 mm ausgebildet.

In Figur 3 ist ferner erkennbar, dass in den äußeren Randbereichen der Flächen 22a, 22b, 22c kleine Flansche 28a, 28b, 28c ausgebildet sind, die in der Einbaulage mit der Innenseite des Rahmens 12 zur Anlage kommen und einer verbesserten Verbindung und Abdichtung des Luftleitelements 18 gegenüber dem Rahmen 12 dienen.

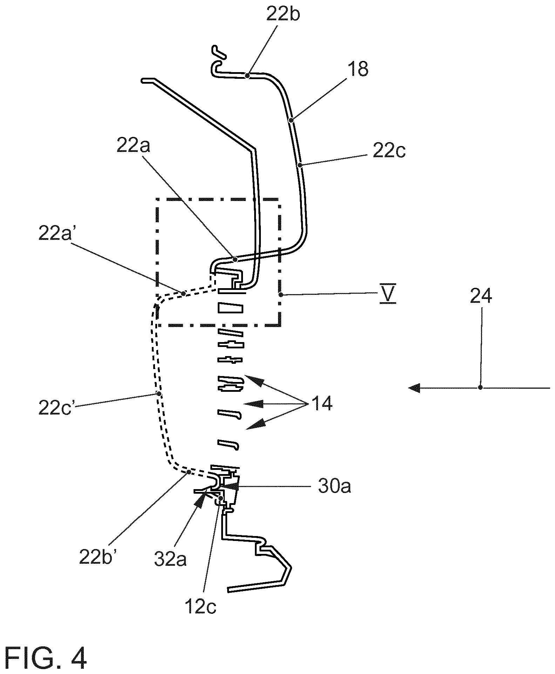

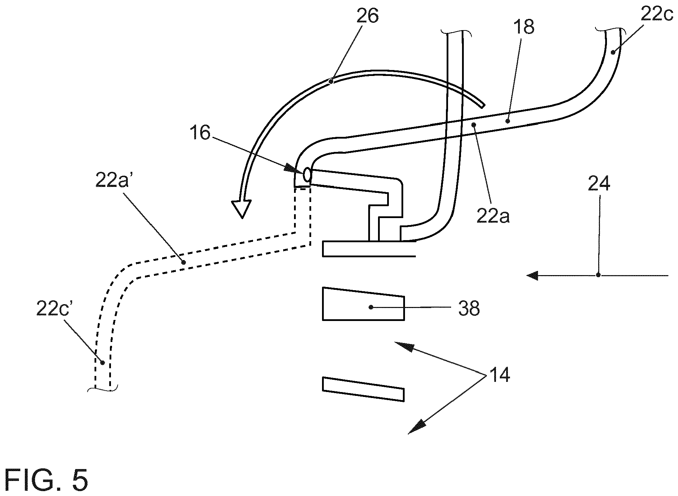

Die Fixierung des Luftleitelements 18 an dem Rahmen 12 kann auf beliebige Art und Weise erfolgen, insbesondere kraftschlüssig, formschlüssig und/oder stoffschlüssig. In der gezeigten Ausführungsform erfolgt die Fixierung über an dem Luftleitelement 18 und dem Rahmen 12 ausgebildete, korrespondierende Rastelemente 30a, 32a. In Figur 4 ist eine entsprechende Rastverbindung im Bereich der untere Fläche 22b und dem unteren Rahmenabschnitt 12c dargestellt. An dem Luftleitelement 18 ist als Rastelement 30a eine federelastische Rastnase ausgebildet. An dem Rahmen 12 ist als Rastelement 32a ein korrespondierender Rastvorsprung ausgebildet. Ein erfindungsgemäßes Lüftungsgitter 10 mit einem über ein Filmscharnier 16 verbundenen Luftleitelement 18 kann einfach und kostengünstig als Kunststoffspritzgussteil in der in den Figuren 1 und 2 gezeigten Werkzeuglage, d.h. im aufgeklappten Zustand des Luftleitelements 18, hergestellt werden. Zur Fixierung wird das Luftleitelement 18 gemäß dem Pfeil 26 um die Schwenkachse 20 geklappt und dann so weit in Richtung Rahmen 12 gedrückt, bis die Rastnase - wie in Figur 5 gestrichelt dargestellt - hinter dem Rastvorsprung einrastet.

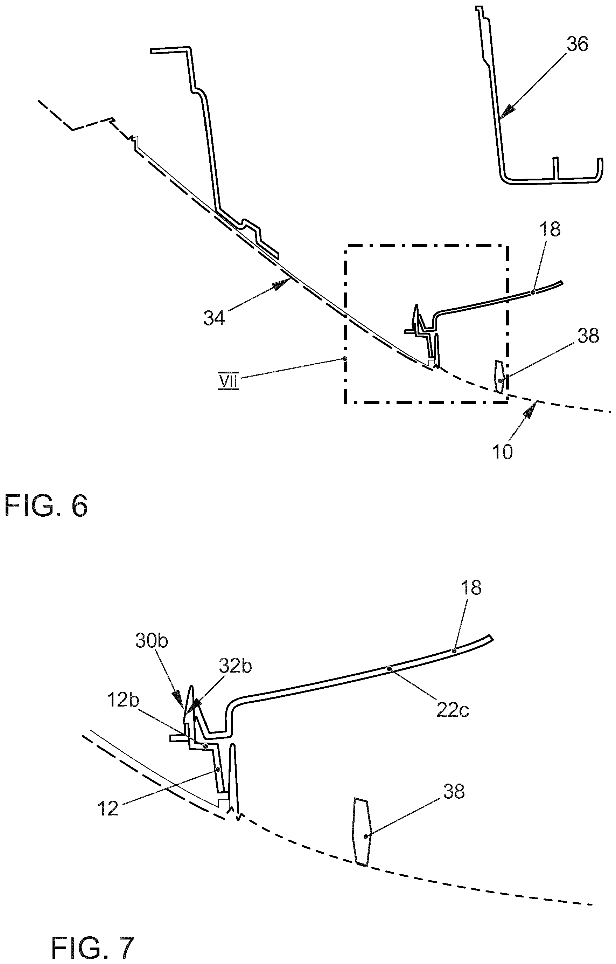

In den Figuren 6 und 7 ist in Verbindung mit einem Horizontalschnitt gemäß den Pfeilen VI-VI in Figur 2 eine weitere Rastverbindung im Bereich zwischen der Verbindungsfläche 22c und dem seitlichen Rahmenabschnitt 12b mit Rastelementen 30b, 32b dargestellt. An der Verbindungsfläche 22c ist als Rastelement 30b eine Durchgangsöffnung ausgebildet. An dem seitlichen Rahmenabschnitt 12b ist als Rastelement 32b ein Rastvorsprung ausgebildet, welcher so ausgebildet ist, dass der Rastvorsprung elastisch durch die Durchgangsöffnung geschoben werden kann, um eine Rastverbindung zwischen dem Luftleitelement 18 und dem Rahmen 12 herzustellen.

In Figur 6 sind auch an das erfindungsgemäße Lüftungsgitter 10 angrenzende Elemente erkennbar, insbesondere ein Stoßfänger 34 und ein Frontend 36.

Wenn über den Umfang des Luftleitelements 18 und des Rahmens 12 verteilt in den jeweils aneinander angrenzenden Bereichen ausreichend viele korrespondierende Rastelemente 30a, 32a, 30b, 32b angeordnet sind, kann das Luftleitelement 18 in Einbaulage derart an dem Rahmen 12 fixiert werden, dass ein im Wesentlichen luftdichter Abschluss zwischen dem Luftleitelement 18 und dem Rahmen 12 erzielt wird. Entlang der Flansche 28a, 28b, 28c ergibt sich in der gezeigten Ausführungsform eine u-förmige Anlagefläche zwischen Rahmen 12 und Luftleitelement 18.

in der gezeigten Ausführungsform ist der Rahmen 12 einstückig mit einer Gitterstruktur 38 ausgebildet. Alternativ kann eine Gitterstruktur 38 auch separat hergestellt und in den Rahmen 12 eingesetzt werden.

An dem Rahmen 12 sind in der gezeigten Ausführungsform weitere Rastelemente 40 ausgebildet, die es ermöglichen, das Lüftungsgitter 10 auf einfache Art und Weise über an einem nicht dargestellten Stoßfänger ausgebildete, korrespondierende Rastelemente mit einem solchen Stoßfänger zu verbinden.

Ein erfindungsgemäßes Lüftungsgitter 10 wird bevorzugt im Kunststoffspritzgießverfahren hergestellt. Als bevorzugtes Material kommt insbesondere Polypropylen zur Anwendung.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Lüftungsgitter
- 12: Rahmen
- 12a: oberer Rahmenabschnitt
- 12b: seitlicher Rahmenabschnitt
- 12c: unterer Rahmenabschnitt
- 12d: seitlicher Rahmenabschnitt
- 14: Öffnung
- 16: Filmscharnier
- 18: Luftleitelement
- 20: Schwenkachse
- 22: Fläche
- 22a: obere Fläche
- 22b: untere Fläche
- 22c: Verbindungsfläche
- 24: Hauptströmungsrichtung
- 26: Pfeil
- 28a: Flansch
- 28b: Flansch
- 28c: Flansch
- 30a: Rastelement (federerlastische Rastnase)
- 30b: Rastelement
- 32a: Rastelement (korrespondierender Rastvorsprung)
- 32b: Rastelement
- 34: Stoßfänger
- 36: Frontend
- 38: Gitterstruktur
- 40: Rastelement

## Patentansprüche

1. Lüftungsgitter für einen Kühlergrill eines Kraftfahrzeuges mit einem Rahmen (12) und innerhalb des Rahmens (12) angeordneten Öffnungen (14) zum Durchströmen von Luft sowie mindestens einem in Strömungsrichtung betrachtet hinter dem Rahmen (12) angeordneten Luftleitelement (18), welches derart angeordnet ist, dass es die Strömungsrichtung von das Lüftungsgitter (10) durchströmender Luft hinter dem Rahmen (12) zumindest teilweise beeinflusst,
**dadurch gekennzeichnet, dass**
das Luftleitelement (18) einstückig mit dem Rahmen (12) ausgebildet ist.

2. Lüftungsgitter nach dem vorstehenden Anspruch, **dadurch gekennzeichnet, dass** das Luftleitelement (18) über ein Filmscharnier (16) einstückig mit dem Rahmen (12) ausgebildet ist.

3. Lüftungsgitter nach einem oder mehreren der vorstehenden Ansprüche, **dadurch gekennzeichnet, dass** zwei Luftleitelemente (18) an gegenüberliegenden Seiten an dem Rahmen (12) angeordnet sind.

4. Lüftungsgitter nach einem oder mehreren der vorstehenden Ansprüche, **dadurch gekennzeichnet, dass** das mindestens eine Luftleitelement (18) glatte, luftundurchlässige Flächen (22) aufweist.

5. Lüftungsgitter nach einem oder mehreren der vorstehenden Ansprüche, **dadurch gekennzeichnet, dass** an dem Rahmen (12) und an dem mindestens einen Luftleitelement (18) korrespondierende Rastelemente (30a, 32a, 30b, 32b) zur Fixierung des Luftleitelements (18) an dem Rahmen (12) ausgebildet sind.

6. Lüftungsgitter nach einem oder mehreren der vorstehenden Ansprüche, **dadurch gekennzeichnet, dass** es für ein Kraftfahrzeug vorgesehen ist und das Luftleitelement (18) im eingebauten Zustand einen Winkel von 10° bis 80° zur Querachse des Kraftfahrzeuges aufweist.

7. Lüftungsgitter nach einem oder mehreren der vorstehenden Ansprüche, **dadurch gekennzeichnet, dass** das Luftleitelement (18) einen u-förmigen Querschnitt aufweist.

8. Lüftungsgitter nach einem oder mehreren der vorstehenden Ansprüche, **dadurch gekennzeichnet, dass** sich das mindestens eine Luftleitelement (18) über die gesamte Höhe des Rahmens (12) erstreckt.

9. Lüftungsgitter nach einem oder mehreren der vorstehenden Ansprüche, **dadurch gekennzeichnet, dass** das Luftleitelement (18) entlang eines sich über die Höhe des Rahmens (12) erstreckenden Kontaktbereichs unmittelbar an dem Rahmen (12) anliegt.

10. Verfahren zur Herstellung eines Lüftungsgitters (10) für einen Kühlergrill eines Kraftfahrzeuges mit mindestens einem Rahmen (12) und innerhalb des Rahmens (12) angeordneten Öffnungen (14) zum Durchströmen von Luft sowie einem in Strömungsrichtung hinter dem Rahmen (12) angeordneten Luftleitelement (18), welches derart angeordnet ist, dass es die Strömungsrichtung von das Lüftungsgitter (10) durchströmender Luft hinter dem Rahmen (12) zumindest teilweise beeinflusst, **dadurch gekennzeichnet, dass** in einem ersten Schritt mindestens der Rahmen (12) und das Luftleitelement (18) in einer frei wählbaren Lage im Kunststoffspritzgießverfahren so hergestellt werden, dass der Rahmen (12) und das Luftleitelement (18) nach der Herstellung über ein Filmscharnier (16) miteinander verbunden sind und in einem zweiten Schritt das Luftleitelement (18) durch eine Relativbewegung gegenüber dem Rahmen (12) um das Filmscharnier (16) in eine Position gebracht wird, in welcher es die Strömungsrichtung von das Lüftungsgitter (10) durchströmender Luft hinter dem Rahmen (12) zumindest teilweise beeinflusst.

## Claims

1. Ventilation grille for a radiator grille of a motor vehicle having a frame (12) and openings (14) which are arranged within the frame (12) for the throughflow of air, and at least one air guiding element (18) which is arranged behind the frame (12) as viewed in the flow direction and is arranged in such a way that it at least partially influences the flow direction of air which flows through the ventilation grille (10) behind the frame (12), **characterized in that** the air guiding element (18) is configured in one piece with the frame (12).

2. Ventilation grille according to the preceding claim, **characterized in that** the air guiding element (18) is configured in one piece with the frame (12) via an integral hinge (16).

3. Ventilation grille according to one or both of the preceding claims, **characterized in that** two air guiding elements (18) are arranged on the frame (12) on opposite sides.

4. Ventilation grille according to one or more of the preceding claims, **characterized in that** the at least one air guiding element (18) has smooth, air-impermeable faces (22).

5. Ventilation grille according to one or more of the preceding claims, **characterized in that** corresponding latching elements (30a, 32a, 30b, 32b) for fixing the air guiding element (18) on the frame (12) are configured on the frame (12) and on the at least one air guiding element (18).

6. Ventilation grille according to one or more of the preceding claims, **characterized in that** it is provided for a motor vehicle and, in the installed state, the air guiding element (18) is at an angle of from 10° to 80° with respect to the transverse axis of the motor vehicle.

7. Ventilation grille according to one or more of the preceding claims, **characterized in that** the air guiding element (18) has a U-shaped cross section.

8. Ventilation grille according to one or more of the preceding claims, **characterized in that** the at least one air guiding element (18) extends over the entire height of the frame (12).

9. Ventilation grille according to one or more of the preceding claims, **characterized in that** the air guiding element bears directly against the frame (12) along a contact region which extends over the height of the frame (12).

10. Method for producing a ventilation grille (10) for a radiator grille of a motor vehicle having at least one frame (12) and openings (14) which are arranged within the frame (12) for the throughflow of air, and an air guiding element (18) which is arranged behind the frame (12) in the flow direction and is arranged in such a way that it at least partially influences the flow direction of air which flows through the ventilation grille (10) behind the frame (12), **characterized in that**, in a first step, at least the frame (12) and the air guiding element (18) are produced in a freely selectable position using the plastic injection moulding process in such a way that, after the production, the frame (12) and the air guiding element (18) are connected to one another via an integral hinge (16), and, in a second step, the air guiding element (18) is moved around the integral hinge (16) by way of a relative movement with respect to the frame (12) into a position, in which it at least partially influences the flow direction of air which flows through the ventilation grille (10) behind the frame (12).

## Revendications

1. Grille d'aération pour une grille de radiateur d'un véhicule automobile, comprenant un cadre (12) et des ouvertures (14) disposées à l'intérieur du cadre (12) pour le passage d'air ainsi qu'au moins un élément de guidage d'air (18) disposé derrière le cadre (12), considéré dans la direction d'écoulement, lequel est disposé de telle sorte qu'il influence au moins en partie le sens d'écoulement de l'air s'écoulant à travers la grille d'aération (10) derrière le cadre (12),
**caractérisée en ce que**
l'élément de guidage d'air (18) est réalisé d'une seule pièce avec le cadre (12).

2. Grille d'aération selon la revendication précédente, **caractérisée en ce que** l'élément de guidage d'air (18) est réalisé d'une seule pièce avec le cadre (12) par le biais d'une charnière à film (16).

3. Grille d'aération selon l'une quelconque ou plusieurs des revendications précédentes, **caractérisée en ce que** deux éléments de guidage d'air (18) sont disposés sur des côtés opposés au niveau du cadre (12).

4. Grille d'aération selon l'une quelconque ou plusieurs des revendications précédentes, **caractérisée en ce que** l'au moins un élément de guidage d'air (18) présente des surfaces lisses imperméables à l'air (22).

5. Grille d'aération selon l'une quelconque ou plusieurs des revendications précédentes, **caractérisée en ce que** des éléments d'encliquetage correspondants (30a, 32a, 30b, 32b) sont réalisés sur le cadre (12) et sur l'au moins un élément de guidage d'air (18) pour la fixation de l'élément de guidage d'air (18) sur le cadre (12).

6. Grille d'aération selon l'une quelconque ou plusieurs des revendications précédentes, **caractérisée en ce qu'**elle est prévue pour un véhicule automobile et l'élément de guidage d'air (18) présente, dans l'état installé, un angle de 10° à 80° par rapport à l'axe transversal du véhicule automobile.

7. Grille d'aération selon l'une quelconque ou plusieurs des revendications précédentes, **caractérisée en ce que** l'élément de guidage d'air (18) présente une section transversale en forme de u.

8. Grille d'aération selon l'une quelconque ou plusieurs des revendications précédentes, **caractérisée en ce que** l'au moins un élément de guidage d'air (18) s'étend sur toute la hauteur du cadre (12).

9. Grille d'aération selon l'une quelconque ou plusieurs des revendications précédentes, **caractérisée en ce que** l'élément de guidage d'air (18) s'applique directement contre le cadre (12) le long d'une région de contact s'étendant sur la hauteur du cadre (12).

10. Procédé de fabrication d'une grille d'aération (10) pour une grille de radiateur d'un véhicule automobile, comprenant au moins un cadre (12) et des ouvertures (14) disposées à l'intérieur du cadre (12) pour le passage d'air ainsi qu'un élément de guidage d'air (18) disposé derrière le cadre (12) dans la direction d'écoulement, lequel est disposé de telle sorte qu'il influence au moins en partie le sens d'écoulement de l'air s'écoulant à travers la grille d'aération (10) derrière le cadre (12), **caractérisé en ce que**, dans une première étape, au moins le cadre (12) et l'élément de guidage d'air (18) sont fabriqués dans une position librement sélectionnable par un procédé de moulage par injection de plastique de telle sorte que le cadre (12) et l'élément de guidage d'air (18) soient connectés l'un à l'autre après la fabrication par le biais d'une charnière à film (16) et, dans une deuxième étape, l'élément de guidage d'air (18) est amené par un mouvement relatif par rapport au cadre (12) autour de la charnière à film (16) dans une position dans laquelle il influence au moins en partie la direction d'écoulement de l'air s'écoulant à travers la grille d'aération (10) derrière le cadre (12).
